(19) **Europäisches Patentamt / European Patent Office / Office européen des brevets**

(11) **EP 4 707 846 A1**

(12) **EUROPEAN PATENT APPLICATION**

(43) Date of publication:
**11.03.2026  Bulletin 2026/11**

(21) Application number: **24306462.3**

(22) Date of filing: **06.09.2024**

(51) International Patent Classification (IPC):
***G01S 5/02*** (2010.01)          ***G01S 5/06*** (2006.01)

(52) Cooperative Patent Classification (CPC):
**G01S 5/0278; G01S 5/0284; G01S 5/0289; G01S 5/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **CORLAY, Vincent**
**35708 RENNES CEDEX 7 (FR)**
• **NGUYEN, Viet Hoa**
**35708 RENNES CEDEX 7 (FR)**
• **GRESSET, Nicolas**
**35708 RENNES CEDEX 7 (FR)**

(74) Representative: **Plasseraud IP**
**104 Rue de Richelieu**
**CS92104**
**75080 Paris Cedex 02 (FR)**

(54) **PROBABILISTIC AIDED POSITIONING METHOD, DEVICE AND CORRESPONDING COMPUTER PROGRAM**

(57)     The disclosure relates to a method for determining a piece of data representing a position of a transmitter within an environment which comprises a set of receivers. According to the disclosure comprises the following steps:

- Obtaining (S01) a vector comprising N measures related to a propagation time ($[y_{2\_1}, \ldots , y_{2\_N}]$) of a signal, the signal being emitted by the transmitter, each value of the vector being related to a given receiver of the set of receivers,

- using the signal and the vector of N measures related to the propagation time, determining (S02) a set of points and their corresponding weights, in a representation of the environment, each point being associated to one of the measures related to the propagation time of the vector,

- computing (S03) the piece of data representing the position of the transmitter using the set of points and their corresponding weights.

[Fig. 3]

EP 4 707 846 A1

**Description**

<u>Domain</u>

The present disclosure relates to user equipment positioning methods and devices in environment where user equipment is connected to a network through base stations.

<u>Prior Art</u>

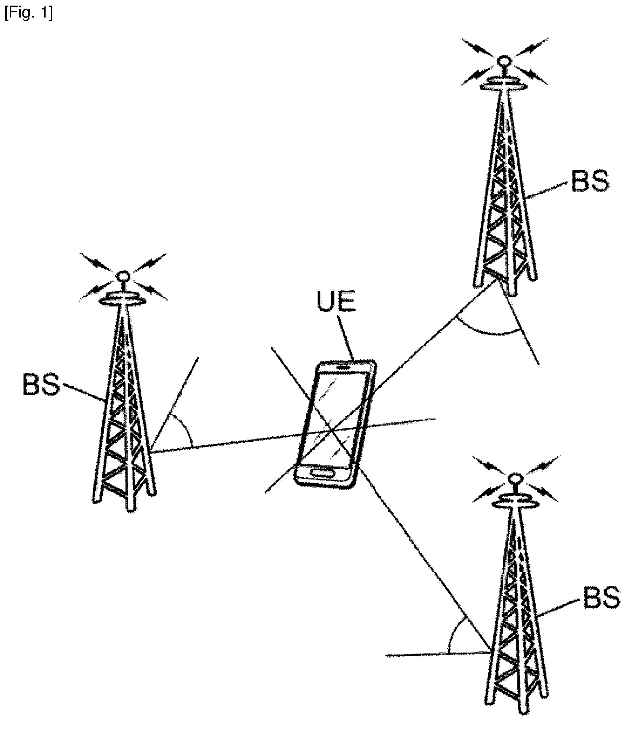

Standard positioning systems rely on measurements of so called *"line-of-sight"* (LOS). As an example, shown in Figure 1, if three base-stations ("BS") estimate the angle of arrival (AoA) of a reference signal transmitted by a user equipment ("UE") such as a telecommunication terminal, the regular triangulation method can be implemented as follows. A server, knowing the position of the two BS and the measured AoA, looks for the intersection of the three rays leaving the BS in the measured AoA direction. The estimated position of the UE is this intersection.

Nevertheless, the received signals at the BS may be *"non line-ot-sight"* (NLOS). The signal might have been reflected before arriving to the BS. In this case, the measured AoA does not indicate the real direction of the UE but the direction of the last reflecting object. As a result, the above standard triangulation is not sufficient for the positioning operation.

One solution to address this issue is to use online or offline ray tracing: given measured AoA, ray tracing in these AoA directions is performed. The intersection of the rays is then the estimated position. This approach is called *"reverse ray tracing",* the principle of which is illustrated in Figure 2. Alternatively, geometric equations rather than conventional ray tracing can be considered.

Of course, the measurements may not be perfectly accurate, and the measured AoA corrupted by some noise. Several rays are launched in an interval around the measured AoA. The considered width of the interval is twice the estimated standard deviation of the estimated AoA value. A least square solution, assuming i.i.d. Gaussian noise on the estimated AoA, can be also used.

But, in all these previously known techniques, the statistics of the measurement were not fully taken into account in conventional ray-tracing aided positioning, and the performance couldn't be optimal. To that end, it was formerly proposed a method for determining the location of a transmitter in which statistical properties of the AoA were computed and the 3D model of the environment was used for obtaining some weighted paths, which were then used to determine the location of the transmitter.

However, while these previously proposed methods were relatively efficient, some aspect relative to other measurements are not considered. This leads to an increase of the amounts of calculations done and a limitation in the accuracy of the location of the user equipment.

<u>Summary</u>

The present disclosure aims to improve the situation. More specifically, a method using another source of information is disclosed. The information source is the time of propagation of the signal. To that end, the disclosure proposes a method for determining a piece of data representing a position of a transmitter within an environment which comprises a set of receivers, the method comprising the following steps:

- obtaining a vector comprising N measures related to a propagation time $y_2 = [y_{2\_1}, \ldots, y_{2\_N}]$ of a signal, the signal being emitted by the transmitter, each value of the vector being related to a given receiver of the set of receivers,
- using the signal and the vector of N measures related to the propagation time, determining a set of points and their corresponding weights, in a representation of the environment, each point being associated to one of the measures related to the propagation time of the vector,
- computing the piece of data representing the position of the transmitter using the set of points and their corresponding weights.

The aforesaid environment and signal can be related to any kind of wave: radiofrequency, or acoustic, or optic, etc. The measurement can hence be performed by a radiofrequency antenna, or any 2D or 3D optic sensor (couple cameras for example), or any microphone array.

According to a feature, determining the set of points comprises:

- obtaining statistical properties of the propagation time,
- using a 3D representation of the environment and the statistical properties of the propagation time for obtaining at least one path in the 3D representation of the environment,

- selecting at least one point in some of the at least one path and associating a corresponding weight to the at least one point.

According to a feature, obtaining statistical properties comprises determining statistics of the propagation time error. This allows determining a probability distribution which can then be used for sampling points on the paths defined by the rays for example.

According to a feature, obtaining at least one path associated with a corresponding propagation time of the vector comprises determining bounds on the lengths of the at least one path as a function of the statistical properties of the propagation time. Hence, it is possible to reduce calculation made on ray launching and to limit resource consumption.

According to a feature, using the 3D representation of the environment and the statistical properties of the propagation time for obtaining the at least one path in the 3D representation of the environment comprises computing the paths using the 3D representation, the paths starting at the receiver and extending in possible angles of a predefined range. Hence, it is possible to limit, at some extend, the calculation done for computing the path. For example, in the event a receiver is positioned with a wall on its back, ray launching can be avoided on the back of the receiver.

According to a feature, using the 3D representation of the environment and the statistical properties of the propagation time for obtaining the at least one path in the 3D representation of the environment further comprises computing each weight associated to a point of the path, based on the statistical properties of the propagation time and based on the measures related to the propagation time.

Hence, each point (potentially each point in a predefined range of length of the path associated to the ray) possess a probability of being the effective point according to the propagation time statistics.

According to a feature, using the 3D representation of the environment and the statistical properties of the at least one propagation time for obtaining at least one path in the 3D representation of the environment comprises:

- sampling at least one sampled path length, as a function of the at least one measure related to the propagation time and the statistical properties of the propagation time,
- and wherein associating a corresponding weight to the at least one point comprises assigning an equal weight to each of the at least one point of the paths.

In this Monte Carlo approach, hence, the statistical properties are used to limit the length of the path, whatever the direction in which the ray corresponding to this path is launched.

According to a feature, selecting at least one point in some of the at least one path consists, for a given path of the at least one path, in selecting the final point of the given path, the final point being determined by its length in the 3D environment.

Since the length is sampled according to the statistical properties of the propagation time, the selection of the points need not to be done on the statistical properties of the propagation time again.

According to a feature, selecting at least one point in some of the at least one path consists, for a given path of the at least one path, in selecting a number of points of the given path according to a discretization parameter.

For instance, the discretization parameter controls the spacing or density of these points on the path. For discretization parameter can instruct a point selection function and can take the form of an arbitrary spacing between points or a probability function allowing a probability selection of a given number of points in the path, e.g. according to a gaussian function centered according to the statistical properties of the propagation time or other probability functions. For instance, in other situation, the discretization parameter can control the selection of rays according to their lengths, in the situation where rays are sorted and placed in some sets (bins) according to their lengths. The discretization parameter thus determines the boundaries of the bins.

According to a feature, computing the paths using the 3D representation comprises, for a given measure related to a propagation time among the at least one measures related to the propagation times, launching rays at a random angle of departure in a predetermined range of angles of departure.

According to a feature the vector further comprises N angles of arrival ($y_1 = [y_{1\_1}, ..., y_{1\_N}]$) "AoA" of the signal and determining the at least one path further comprises associating with a corresponding angle of arrival "AoA" of the vector.

Hence, by combining these two features, the obtained position is more precise and/or obtained in a fewer timer with less resources.

According to a feature, the vector further comprises N angles of arrival ($[y_{1\_1}, ..., y_{1\_N}]$) "AoA" of the signal and determining the at least one path *comprises,* for a given receiver of said set of receivers: launching in the 3D representation of the environment, using a Monte Carlo algorithm, at least one ray, wherein angle of departure AoD of the at least one ray is sampled as a function of the angle of arrival "AoA" corresponding to the given receiver, and wherein the at least one path for the given receiver is selected among the at least one ray.

According to a feature, the measures related to the propagation times of the vector $y_2$ are measured relative propagation times, wherein a relative propagation time is the difference between two propagation times of the signal at two different receivers of the set of receivers (i.e. is obtained as the difference between the two measured time of arrival at two receivers), and wherein selecting the at least one point comprises:

- for at least two paths of two different receivers, among the at least one path in the 3D representation, and for a given number of pair of points, each point of a pair of points belonging to one of the two paths, computing path-relative propagation times (i.e. equivalent to the path distance or length difference),
- sampling sampled relative propagation times, as a function of the measured relative propagation times of the vector and statistical properties of relative propagation times,
- with the sampled relative propagation time, selecting a pair of points based on their path-relative propagation time.

Hence, its possible to associate points of several different path for obtaining differential locations, the differential locations being the most probable when the pairs of points are for example hitting the 2D plane at the predetermined location.

According to a feature, the measures related to the propagation times of the vector are determined by computing a difference between a time of arrival (TOA) and a time of departure (TOD) of the signal.

According to a feature, the measures related to the propagation times of the vector are determined by computing delays corresponding to the larger coefficients of a channel impulse response.

According to a feature, computing the piece of data representing the position of the transmitter using the points comprises estimating the location of the transmitter according to a set of selected points.

The present disclosure aims also at a computer program comprising instructions causing the implementation of the method defined above when such instructions are run by a processor.

It aims also at a device for determining the location of a transmitter in an environment comprising a plurality of receivers having respective known positions, the device comprising an interface for receiving measurements performed by the receivers and a processor to implement the method defined above.

Drawings

More details are presented in the specification below, with reference to the appended drawings where:

- Figure 1, already presented, shows the principle of positioning based on angle of arrivals' measurements in a line-of-sight (LOS) case,
- Figure 2, already presented, Illustrates the use of ray-tracing to enhance the positioning,
- Figure 3 Illustrates the main steps of the positioning method according to the disclosure,
- Figure 4 shows an example of embodiment of a device to perform the method presented above.

Description

In the description below, a scenario is considered, where a transmitter (or Tx), such as a user equipment (UE) in a radiofrequency environment in this example, sends a positioning signal to one or several receivers (Rx), such as base stations. The goal of the base stations is to locate the UE with the help of a 3D model of the environment (via ray-tracing for example). It is intended then to exploit here the geometrical property (by a ray-tracing simulation for example) of the environment. The statistical property of the measurements may also be used to enhance the positioning in a wireless system.

In previous existing techniques, the measurements of the uplink signal are Angle of Arrival (AoA) measurements, as exposed above. In some implementation of the positioning method, rays are launched in a Monte Carlo manner according to the statistics of the error of these AoA measurements. While this method is good, other measurements can also serve as good basis for locating the user equipment. This is why the inventors proposed a method which is based on the use of other available measurements such as the propagation time (PT) or the relative propagation time (RPT) of the signal. These measurements can be used alone (i.e. to estimate the position of the user equipment), or in conjunction with the AoA measurements, as it is depicted below. As it is detailed, the propagation time measurements can be used to limit the size of the rays in the ray launching step. The inventors also propose a Monte Carlo "re"sampling step, where the rays are selected via two Monte Carlo steps.

With respect to the disclosed technique, some statistical modelling and notation elements are introduced. Let X be a random variable representing the position of a user equipment. Let $\mathcal{L}$ be a random variable representing the true propagation time of the signal, and Y a random variable representing the (propagation time) measurement(s) of the propagation time.

Regarding the notations: $p(L|y)$ is used for $p(\mathcal{L} = L|Y = y)$ and similarly $p(x|y)$ is used for $p(X = x|Y = y)$. The distribution $p(L|y)$ represents the statistics of the uplink propagation time measurement error, e.g., $p(L|y) \sim \mathcal{N}(L|\sigma^2)$.

In addition, $n$ is the number of measurements (assuming one measurement is done per receiver) such that $y_2 = [y_1, y_2, ... , y_i, ... , y_n]$. The vector y comprises the measurement performed by all receivers. For the sake of simplicity, it can be assumed that each measurement set $y_i$ contains one category of measurement, and one can have several categories $(y_{1\_i}, y_{2\_i})$ such as the angle of arrival, the propagation time and $n$ receivers. One can also get two vectors: one for the angles of arrival and the other for the propagation times. In terms of notation, $y_2$ stands for the vectors of the propagation times while $y_1$ stands for the vectors of the angles of arrival.

In the considered problem, the goal is to compute $p(x|y_2)$, i.e. the probability of the location x considering the n propagation times of the vector $y_2$ (which is the same as the n values of the propagation time vector $y_2$).

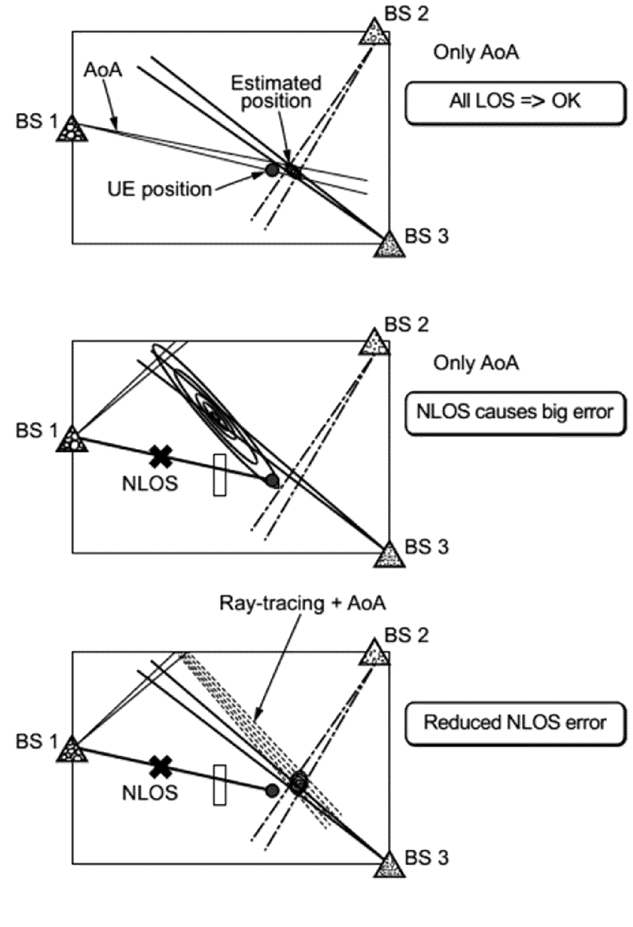

Generally speaking, in relation with figure 3, the proposed method for positioning a user equipment by using the propagation time, instead or in conjunction with the angle of arrival, comprises:

- obtaining S01 a vector comprising N measures related to a propagation time ($[y_{2\_1}, ... , y_{2\_N}]$) of a signal, the signal being emitted by the transmitter, each value of the vector being related to a given receiver of the set of receivers,
- using the signal and the vector of N measures related to the propagation time, determining S02 a set of points SOP and their corresponding weights SOW, in a representation of the 3D environment 3DE, each point (of the set of points SOP) being associated to one of the measures related to the propagation time of the vector,
- computing S03 the piece of data representing the position POS of the transmitter using the set of points SOP and their corresponding weights SOW.

This method can be implemented with predetermined knowledge of the elevation of the user equipment to locate or without this knowledge. In case the elevation of the user equipment is known, the sets of points and their corresponding weights are points in a fictive 2D plane situated at the predetermined elevation. In case the elevation of the user equipment is not (precisely) known, the sets of points and their corresponding weights are points in a volume, which potentially can be the entire volume of the environment.

The vector comprising the N measures related to the propagation time from the user equipment to each of the N receivers can be obtained in several manners such as:

- by computing a difference between a time of arrival (TOA) and time of departure (TOD) of the signal for each receiver.
- by considering the delay corresponding to the larger coefficients of the channel impulse response.

This propagation time information may also be in the form of a probability distribution. Indeed, they may be uncertainty on the estimated propagation time caused by:

- Synchronization errors between the user equipment and the receiver.
- Low resolution of the time of arrival and time of departure due to high symbol duration (small bandwidth).

By denoting $y_2$ a propagation time measurement, the propagation time information can directly be mapped to a suited length of ray L by the formula:

$$L = c * y_2,$$

Where c is the propagation speed of the signal, such as the speed of light. In the cases where a ray is associated to a point in a 2D plane, given a probability distribution on the propagation time, one can deduce a probability distribution $p(L|y_2)$ on the length of the rays that can be launched with respect to the propagation time. As a result, there are two ways to process the rays in this case:

- a ray weighting approach: all the rays are launched (in all directions): for each ray, its length $L$ between the BS and the location where the ray it crosses the 2D plane is computed; then, a weight $p(L|y_2)$ is associated to the ray (i.e. to the point where the ray crosses the 2D plane).
- a Monte Carlo approach (which is a more suitable approach): one should launch the (many) rays according to the distribution $p(L|y_2)$ but the knowledge of the length of a ray is not known a priori and the weight assigned to each path (drawn by its ray) is the same for all paths.

In the Monte Carlo approach, the following method can for example be implemented:

1. launch all the rays (or a high number of rays in all directions - no angle consideration is made in this situation).

2. sort the points (crossing the 2D plane) obtained from the rays by length, and make bins of small size.

3. then, sample many times according to $p(L|y)$: for each sampling operation, one can obtain a value which falls within one bin and chose randomly a ray in this bin.

The Monte Carlo approach yields a map of points.

The processing of the obtained map of points can be performed in several ways.

In this situation, it is supposed that no information is known about the angle of arrival of the signal. In consequence, the rays should be launched in all directions in the ray launching step. As explained below, in the case information about the angle of arrival of the signal is present, ray launching can be adapted and reduced as a function of this angle of arrival.

According to an implementation, determining S02 the set of points and their corresponding weights, in the representation of the environment comprises obtaining statistical properties of the propagation time which consists in gathering multiple measurements of the propagation time for the signal at each receiver, and compute some statistical properties such as the mean, variance, standard deviation, and possibly the distribution of the propagation times. These properties help in understanding the variability and reliability of the measurements. Then, with a predetermined 3D representation of the environment and the statistical properties of the propagation time, many path of the signal(s) are computed. This is done by using the statistical properties of the propagation time to determine possible paths the signal could have taken in the 3D environment. This involves considering notably the line-of-sight, reflections, refractions, and diffractions caused by the environment, via reverse ray tracing steps, starting from each of the receivers. For each propagation time of the signal (i.e. for each receiver), a reverse ray tracing step is performed with the propagation time ($y_{2\_i}$) associated to this receiver ($i$) and the statistical properties of the propagation time. Some conditions or constraints can be added to the path computation with the aid of reverse ray tracing. For example, bounds on the lengths of the paths can be added as a function of the statistical properties of the propagation time or as a function of a maximum allowed computational complexity. This helps avoiding computing paths that are unlikely to represent effective paths the signal could have been taken. In addition, in the general case which is presented (meaning without the use of a potential angle of arrival value), the paths, which are obtained through reverse ray tracings, start at the receiver ($i$), with the propagation time ($y_{2\_i}$) associated to this receiver ($i$) and the statistical properties of the propagation time and extend in possible angles of a predefined range. This also helps avoiding computing paths that are unlikely to represent effective paths the signal could have been taken, for example avoiding paths which start from behind the receiver when the receiver is placed on a wall.

In addition, in some situations, the weight associated to a point of the path, based on the statistical properties of the propagation time and based on the measures related to the propagation time, is computed by statistically attributing weights to some of a selection of points on each path, for example as a function of the length of the path form its starting point (origin).

In other situations, as indicated above, the paths are obtained through a Monte Carlo algorithm. For instance, may rays are launched from the starting points (i.e. from the origin formed by receivers). More specifically, in such situations, for one propagation time measure associated to one receiver, sampling operations are processed for obtaining some path lengths, the sampling being function of the statistical properties of the propagation time. Since sampling is done on the lengths (meaning that the measure and the statistical properties have already been "used"), the weight which is associated to the "points" of such sampled paths is the same for all points of these paths. In addition, for ensuring a simpler way of processing data, the selection of the point of the ray is done by selecting the last point of the ray for a given path. In some situations, the selection of the points can also be done by selecting a number of points of the path according to a discretization parameter, which allows, again, simplifying the calculation to be done.

In some cases, the relative propagation time (RPT) rather than the PT may be available. This information can be obtained from a time difference of arrival (TDOA) of a signal between two BS.

This means that one has an information relative to the length difference between two points of two BS, but not their absolute length. An example of relative length is shown on the following table, which is an example of relative length matrix:

| Point length | 1 | 1.2 | 2 | 3 | 3.5 |
|---|---|---|---|---|---|
| 0.5 | 0.5 | 0.7 | 1.5 | 2.5 | 3 |
| 2 | 1.5 | 0.8 | 0 | 1 | 1.5 |
| 2 | 1 | 0.8 | 0 | 1 | 1.5 |
| 3.5 | 2.5 | 2.3 | 1.5 | 0.5 | 0 |

On the first row: the lengths of the 5 points obtained via ray launching from a first receiver. On the first column: the lengths of the 4 points obtained via ray launching from a second receiver. The table value represents the difference between the various points. In the case the relative propagation times are used, the method comprises applying the Monte-Carlo for sampling pairs of points: one collects the relative length associated to all pair of points, sort them by length, and select a pair of point by Monte Carlo sampling. For instance, the disclosed method comprises (after for each signal received by multiple receivers, measure the propagation times and calculate the relative propagation times, which are the differences between the propagation times of the signal at two different receivers):

- Compute Path-Relative Propagation Times:

    - Consider at least two paths among the possible paths the signal could have taken.
    - For a given number of pairs of points (each point in a pair belonging to one of the two paths), compute the path-relative propagation times. This involves calculating the time differences for each pair of points along the paths.

- Sample Relative Propagation Times:

    - Use the measured relative propagation times and their statistical properties (such as mean, variance, and distribution) to generate sampled relative propagation times.
    - This sampling can be done using Monte Carlo methods, where samples from the distribution of relative propagation times are drawn.

- Select Pair of Points:

    - With the sampled relative propagation times, select a pair of points based on their path-relative propagation time.
    - This selection involves finding pairs of points whose path-relative propagation times match or are closest to the sampled relative propagation times.

By using relative propagation times, the method is less sensitive to absolute timing errors and more robust to noise. Relative measurements can cancel out systematic errors that might affect absolute measurements. In addition, the use of statistical properties and Monte Carlo sampling allows for a more accurate representation of the uncertainty in the measurements. This leads to more reliable estimates of the emitter's location. Furthermore, considering multiple paths and pairs of points provides flexibility in the analysis. This is particularly useful in complex environments where the signal might take different paths due to reflections, refractions, or other propagation effects. The method also makes efficient use of the available data by considering the statistical properties of the measurements. This can help in situations where the data is limited or noisy. The Monte Carlo sampling approach is much more scalable and can be easily adapted to handle many receivers and paths. This is beneficial for large-scale systems where the number of receivers and potential paths can be high. Finally, by selecting pairs of points based on their path-relative propagation times, the method can improve the localization accuracy. This is because it considers the spatial relationships between the points and the statistical properties of the measurements.

In other situations, combining the information extracted from the propagation times and the angles of arrival of the signal can be an effective way of more quickly determining the location of the user equipment.

For theorical support purpose, let X be the random variable representing the position of the user equipment. Let 0 be the random variable representing the true angle of arrival of the signal, and $Y$ a random variable representing the receiver measurement(s) of the angle of arrival.

Regarding the notations, one uses $p(\theta|y)$ for $p(\Theta = \theta|Y = y)$ and similarly $p(x|y)$ for $p(X = x|Y = y)$. The distribution $p(\theta|y)$ represents the statistics of the uplink angle of arrival measurement error, e.g., $p(\theta|y) \sim \mathcal{N}(\theta|\sigma^2)$.

We let $n$ be the number of measurements such that $y_1 = [y_{1\_1}, y_{1\_2}, \dots, y_{1\_i}, \dots, y_{1\_n}]$.

The vector $y_1$ comprises the measurements performed by all receivers. For the sake of simplicity, we assume that there is one set of measurements per receiver, and therefore $n$ receivers, as exposed in relation with the propagation time measurements.

Hence, if access to both measurements $y_1$ and measurements $y_2$ (e.g., angle of arrival and propagation time) is possible, both can be used to improve the construction of the map of points. In this situation, the rays are launched (for the Monte Carlo case, weighted otherwise) according to $p(L, \theta|y_1, y_2)$.

Thus, it is possible to assert the situation in the following form:

$$p(L, \theta|y_1, y_2) \propto p(y_1, y_2|L, \theta) = p(y_1|L, \theta, y_2) * p(y_2|L, \theta) = p(y_1|\theta) * p(y_2|L),$$

where $p(y_1|\theta) \propto p(\theta|y_1)$ and $p(y_2|_L) \propto p(L|y_2)$.

As a consequence, implementing the location determination method in this situation comprises, for example, for each of the n receivers, launching in the 3D representation of the environment, (using a Monte Carlo algorithm, i.e. sampling), many rays, the angle of departure of the rays being sampled as a function of the angle of arrival corresponding to the receiver. In other words, the rays are sampled according to $p(\theta|y_1)$. The path associated to each receiver is selected among the rays launched for this receiver.

More specifically, after obtaining the set of rays, they are sorted by length and placed in bins of small size (according to a discretization parameter defining the size and/or boundaries of the lengths of each bin (set)). Then a second sampling operation occurs, but it is then made on the propagation time vector values (sampled many times according to $p(L|y_2)$). For each sampling operation, a value which falls within one (of the previous determined) bin is obtained. Then a ray is chosen in this bin as the selected path.

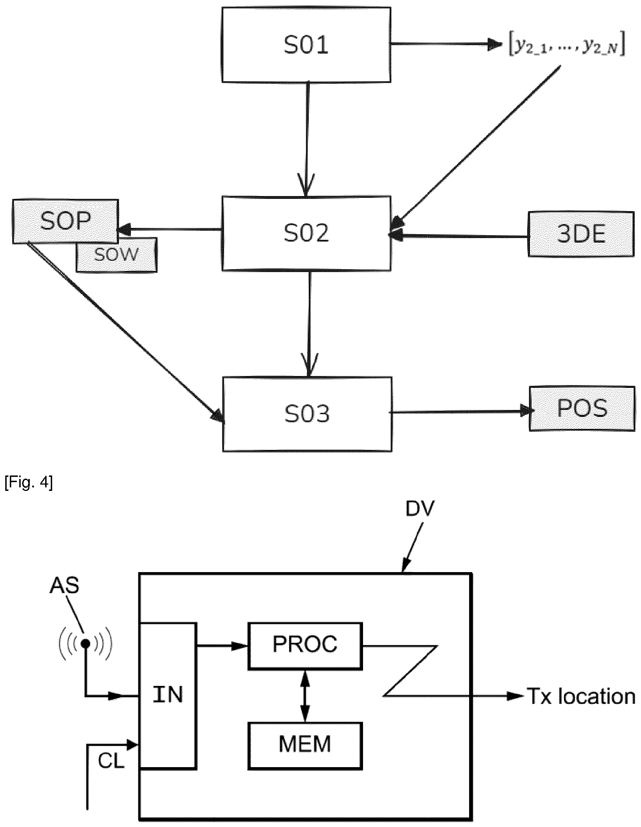

According to the embodiments presented above, each receiver can determine all or part of the position of the user equipment based on its own receiver's configuration. In addition, the determination of the user equipment position can also be performed by a centralised device (which may be one of the receivers) which obtained the necessary data from the receivers and calculate the position as exposed in this disclosure. As shown in figure 4, the configuration of a device DV that affects the measurement can be, as presented above, an antenna system AS, for example coupled through an interface IN to a processing circuit including a processor PROC and a memory MEM. Alternatively, or in complement, or as a variant, necessary data (e.g. propagation times, angles of arrival) can also be received thru a communication link CL allowing the device to perform the position determination of the disclosure. The memory stores at least instructions of a computer program according to the present disclosure.

**Claims**

1. A method for determining a piece of data representing a position of a transmitter within an environment which comprises a set of receivers, the method comprising the following steps:

   - Obtaining (S01) a vector comprising N measures related to a propagation time ($y_2 = [y_{2\_1}, ... , y_{2\_N}]$) of a signal, the signal being emitted by the transmitter, each value of the vector being related to a given receiver of the set of receivers,
   - using the signal and the vector of N measures related to the propagation time, determining (S02) a set of points and their corresponding weights, in a representation of the environment, each point being associated to one of the measures related to the propagation time of the vector,
   - computing (S03) the piece of data representing the position of the transmitter using the set of points and their corresponding weights.

2. The method according to claim 1, wherein determining (S02) the set of points *comprises:*

   - obtaining statistical properties of the propagation time,
   - using a 3D representation of the environment and the statistical properties of the propagation time for obtaining at least one path in the 3D representation of the environment,
   - selecting at least one point in some of the at least one path and associating a corresponding weight to the at least one point.

3. The method according to claim 2, wherein obtaining statistical properties *comprises* determining statistics of the propagation time error.

4. The method according to claim 2, wherein obtaining at least one path associated with a corresponding propagation time of the vector *comprises* determining bounds on the lengths of the at least one path as a function of the statistical properties of the propagation time.

5. The method according to claim 2, wherein using the 3D representation of the environment and the statistical properties of the propagation time for obtaining the at least one path in the 3D representation of the environment *comprises* computing the paths using the 3D representation, the paths starting at the receiver and extending in possible angles of a predefined range.

6. The method according to claim 5, wherein using the 3D representation of the environment and the statistical properties of the propagation time for obtaining the at least one path in the 3D representation of the environment further *comprises* computing each weight associated to a point of the path, based on the statistical properties of the propagation time and based on the measures related to the propagation time.

7.  The method according to claim 5, wherein using the 3D representation of the environment and the statistical properties of the at least one propagation time for obtaining at least one path in the 3D representation of the environment *comprises:*

    - sampling at least one sampled path length, as a function of the at least one measure related to the propagation time and the statistical properties of the propagation time, and wherein associating a corresponding weight to the at least one point *comprises* assigning an equal weight to each of the at least one point of the paths.

8.  The method according to claim 2, wherein selecting at least one point in some of the at least one path *consists,* for a given path of the at least one path, in selecting the final point of the given path, the final point being determined by its length in the 3D environment.

9.  The method according to claim 2, wherein selecting at least one point in some of the at least one path consists, for a given path of the at least one path, in selecting a number of points of the given path according to a discretization parameter.

10. The method according to claim 2, wherein computing the paths using the 3D representation *comprises*, for a given measure related to a propagation time among the at least one measures related to the propagation times, launching rays at a random angle of departure in a predetermined range of angles of departure.

11. The method according to any of the previous claim, wherein the vector further comprises N angles of arrival ($[y_{1\_1}, \ldots, y_{1\_N}]$) "AoA" of the signal and wherein determining the at least one path *comprises*, for a given receiver of said set of receivers:

    - launching in the 3D representation of the environment, using a Monte Carlo algorithm, at least one ray, wherein angle of departure (AoD) of the at least one ray is sampled as a function of the angle of arrival "AoA" corresponding to the given receiver, and wherein the at least one path for the given receiver is selected among the at least one ray.

12. The method according to claim 2, wherein the measures related to the propagation times of the vector $y_2$ are measured relative propagation times, wherein a relative propagation time is the difference between two propagation times of the signal at two different receivers of the set of receivers, and wherein selecting the at least one point *comprises:*

    - for at least two paths of two different receivers, among the at least one path in the 3D representation, and for a given number of pair of points, each point of a pair of points belonging to one of the two paths, computing path-relative propagation times,
    - sampling sampled relative propagation times, as a function of the measured relative propagation times of the vector and statistical properties of relative propagation times,
    - with the sampled relative propagation time, selecting a pair of points based on their path-relative propagation time.

13. The method according to any of the previous claim, wherein computing (S03) the piece of data representing the position of the transmitter using the points comprises estimating the location of the transmitter according to a set of selected points.

14. A computer program comprising instructions causing the implementation of the method according to anyone of the preceding claims when such instructions are run by a processor.

15. A device for determining the location of a transmitter in an environment comprising a plurality of receivers having respective known positions, the device comprising an interface for receiving measurements performed by the receivers and a processor to implement the method according to anyone of claims 1 to 13.

[Fig. 1]

BS 2

Only AoA

All LOS => OK

AoA

Estimated position

BS 1

UE position

BS 3

BS 2

Only AoA

NLOS causes big error

BS 1

NLOS

BS 3

Ray-tracing + AoA

BS 2

Reduced NLOS error

BS 1

NLOS

BS 3

S01 $\longrightarrow$ $[y_{2\_1}, \ldots, y_{2\_N}]$

SOP

SOW

S02

3DE

S03 $\longrightarrow$ POS

[Fig. 4]

DV

AS

IN

CL

PROC

MEM

Tx location

Europäisches
Patentamt
European
Patent Office
Office européen
des brevets

# EUROPEAN SEARCH REPORT

Application Number

EP 24 30 6462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 403 948 A1 (MITSUBISHI ELECTRIC R&D CT EUROPE BV [NL] ET AL.) 24 July 2024 (2024-07-24) * paragraphs [0010], [0012], [0013], [0015], [0025] - [0042], [0049] * * figures 1,8,9 * | 1-15 | INV. G01S5/02 G01S5/06 |
| A | US 2008/224930 A1 (CHIZHIK DMITRY [US] ET AL) 18 September 2008 (2008-09-18) * paragraphs [0004], [0007] - [0010], [0029], [0046], [0051] - [0053], [0064] - [0066], [0109] * * figure 5 * | 1-15 | |
| A | CA 2 307 532 A1 (CELL LOC INC [CA]) 6 November 2000 (2000-11-06) * paragraphs [0004], [0006], [0010], [0020], [0028], [0043], [0044] * * figures 2, 5, 6 * | 1-15 | |
| A | US 2017/192083 A1 (AVITZOUR DANIEL [IL]) 6 July 2017 (2017-07-06) * paragraphs [0003], [0011] - [0013], [0019], [0064], [0069] * * figures 1, 3 * | 1-15 | TECHNICAL FIELDS SEARCHED (IPC) G01S |

The present search report has been drawn up for all claims

| Place of search | Date of completion of the search | Examiner |
|---|---|---|
| The Hague | 5 February 2025 | Roxer, Adam |

EPO FORM 1503 03.82 (P04C01)

## ANNEX TO THE EUROPEAN SEARCH REPORT
## ON EUROPEAN PATENT APPLICATION NO.

EP 24 30 6462

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | Publication date | Patent family member(s) | | Publication date |
|---|---|---|---|---|---|
| EP 4403948 | A1 | 24-07-2024 | EP | 4403948 A1 | 24-07-2024 |
| | | | WO | 2024154378 A1 | 25-07-2024 |
| US 2008224930 | A1 | 18-09-2008 | AT | E498846 T1 | 15-03-2011 |
| | | | EP | 2126599 A1 | 02-12-2009 |
| | | | JP | 5674315 B2 | 25-02-2015 |
| | | | JP | 2010525300 A | 22-07-2010 |
| | | | KR | 20090125092 A | 03-12-2009 |
| | | | US | 2008224930 A1 | 18-09-2008 |
| | | | WO | 2008153548 A1 | 18-12-2008 |
| CA 2307532 | A1 | 06-11-2000 | AU | 4282200 A | 21-11-2000 |
| | | | CA | 2307532 A1 | 06-11-2000 |
| | | | CN | 1360804 A | 24-07-2002 |
| | | | WO | 0069198 A1 | 16-11-2000 |
| US 2017192083 | A1 | 06-07-2017 | EP | 3199970 A2 | 02-08-2017 |
| | | | EP | 3637126 A1 | 15-04-2020 |
| | | | SG | 10201700038S A | 30-08-2017 |
| | | | US | 2017192083 A1 | 06-07-2017 |

For more details about this annex : see Official Journal of the European Patent Office, No. 12/82